Europäisches Patentamt

(19) **European Patent Office**

**Office européen des brevets**

(11) Numéro de publication: **0 000 320**
**B1**

(12) **FASCICULE DE BREVET EUROPEEN**

(21) Numéro de dépôt: **78810004.8**

(22) Date de dépôt: **21.06.78**

(51) Int. Cl.³: **B 60 J 7/06, B 60 J 7/18**

(54) Toit ouvrant souple pour automobile

(30) Priorité: **22.06.77 CH 7817/77**
**28.03.78 CH 3260/78**

(43) Date de publication de la demande:
**10.01.79 Bulletin 79/01**

(45) Mention de la délivrance du brevet:
**12.11.80 Bulletin 80/23**

(84) Etats contractants désignés:
**BE DE FR GB LU NL SE**

(56) Documents cités:
**BE - A - 553 936**
**BE - A - 624 884**
**CH - A - 201 483**
**DE - C - 668 406**
**FR - A - 1 086 458**
**FR - A - 1 179 154**
**FR - A - 1 404 296**
**FR - A - 1 469 539**
**FR - A - 1 547 501**
**FR - A - 2 053 488**
**GB - A - 501 078**
**GB - A - 678 300**
**GB - A - 989 694**
**US - A - 3 033 609**

(73) Titulaire: **Mocelin, Jean-Claude**
**57, rue de Rhône**
**CH - 1204 Geneve (CH)**

(72) Inventeur: **Mocelin, Jean-Claude**
**57, rue de Rhône**
**CH - 1204 Geneve (CH)**

(74) Mandataire: **Charbonnier, Georges R.**
**8, Avenue Peschier**
**CH - 1206 Geneve (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Toit ouvrant souple pour automobile

On connaît des toits ouvrants souples pour automobiles comprenant un carter transversal susceptible de se déplacer d'avant en arrière et inversément selon un mouvement de translation dans une ouverture rectangulaire du pavillon, une casquette montée sur le carter, une capote souple attachée d'une part au bord arrière de la casquette et d'autre part au bord arrière de l'ouverture, cette capote étant destinée à être tendue en position de fermeture du toit et repliée en arrière en position d'ouverture, des moyens permettant d'entraîner ledit carter vers l'avant ou vers l'arrière et de plaquer la casquette, en position de fermeture du toit, cointre le bord avant de l'ouverture du pavillon.

Le brevet FR - A - 1.179.154 décrit un toit ouvrant de ce type dans lequel la casquette est montée sur le carter par l'entremise d'un dispositif limitant la course de la casquette par rapport à celle du carter.

Dans ce toit ouvrant, la casquette est plaquée en position de fermeture au moyen d'une timonerie commandée par une poignée. Des ressorts équilibrent la tension de la toile au cours de cette opération.

Le brevet US No 3.033.609 décrit un toit ouvrant du même type dans lequel les mouvements de translation du carter et de placage de la casquette sont commandés par un moteur électrique qui entraîne successivement le carter par l'entremise d'une première liaison cinématique puis la casquette par l'intermédiaire d'une seconde liaison cinématique opérant à partir de l'instant où le carter atteint sa fin de course.

Le brevet FR - A - 2.053.488 décrit pour sa part un toit ouvrant souple d'un type analogue, dans lequel les mouvements du carter transversal et de la casquette sont commandés par un moto-réducteur. L'irréversibilité de ce moto-réducteur assure l'arrêt du carter dans n'importe quelle position et l'inviolabilité du toit dans sa position de fermeture.

Ces toits ouvrants présentent de nombreux invonvénients, notamment:

— ils sont relativement compliqués et partant peu fiables,

— ils ne sont pas auto-réglants, c'est-à-dire qu'ils ne permettent pas d'absorber les différences ou les distorsions dimensionnelles qui existent à la fabrication ou apparaîssent avec l'usure ou les variations de température, d'humidité, etc. entre les diverses parties du toit (toiles, sangles, etc.),

— la force de placage est relativement faible parce qu'elle est obtenue en transformant le couple moteur avec un mauvais rendement,

— l'étanchéité laisse souvent à désirer.

Le toit ouvrant selon l'invention, qui est du type susmentionné, élimine les inconvénients des toits ouvrants connus.

Ce toit, qui comprend des moyens limitant vers l'avant la course de la casquette par rapport à celle du carter et des ressorts qui équilibrent les tensions de la capote, est caractérisé par un mécanisme qui engendre, à partir de l'instant où le carter se déplace seul vers l'avant, à l'encontre de l'action d'un ressort, un mouvement d'abaissement et de placage de la casquette contre le bord antérieur de l'ouverture du pavillon et qui engendre, lors du déplacement inverse, avec l'assistance dudit ressort, un mouvement de décollage et de soulèvement de la casquette.

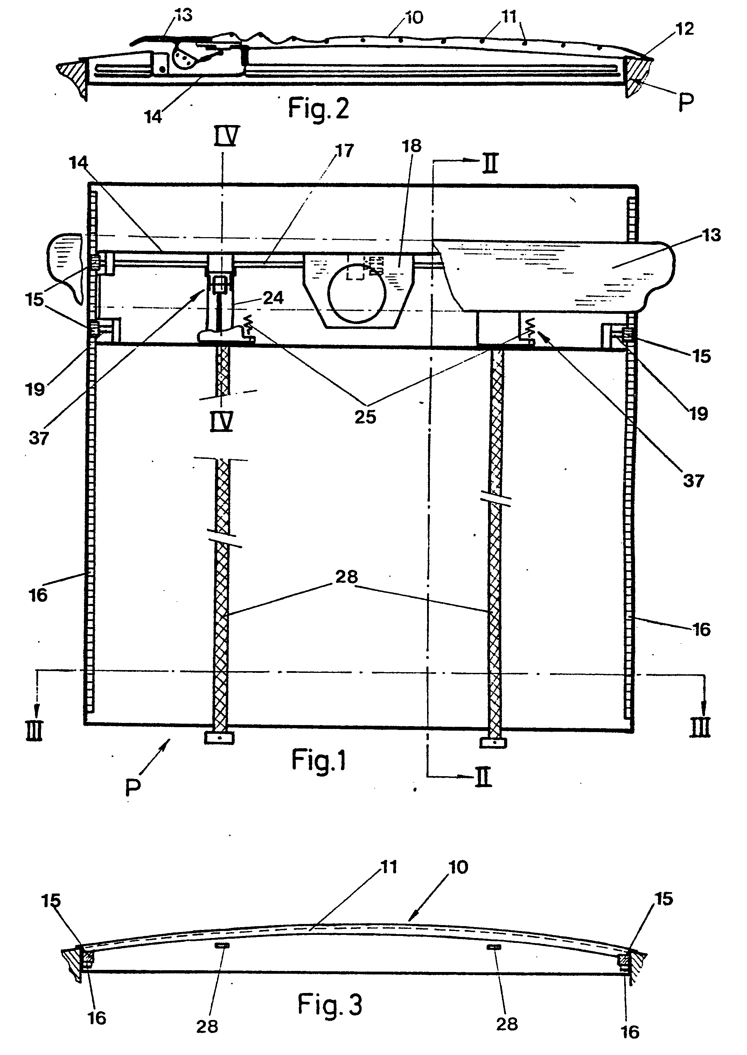

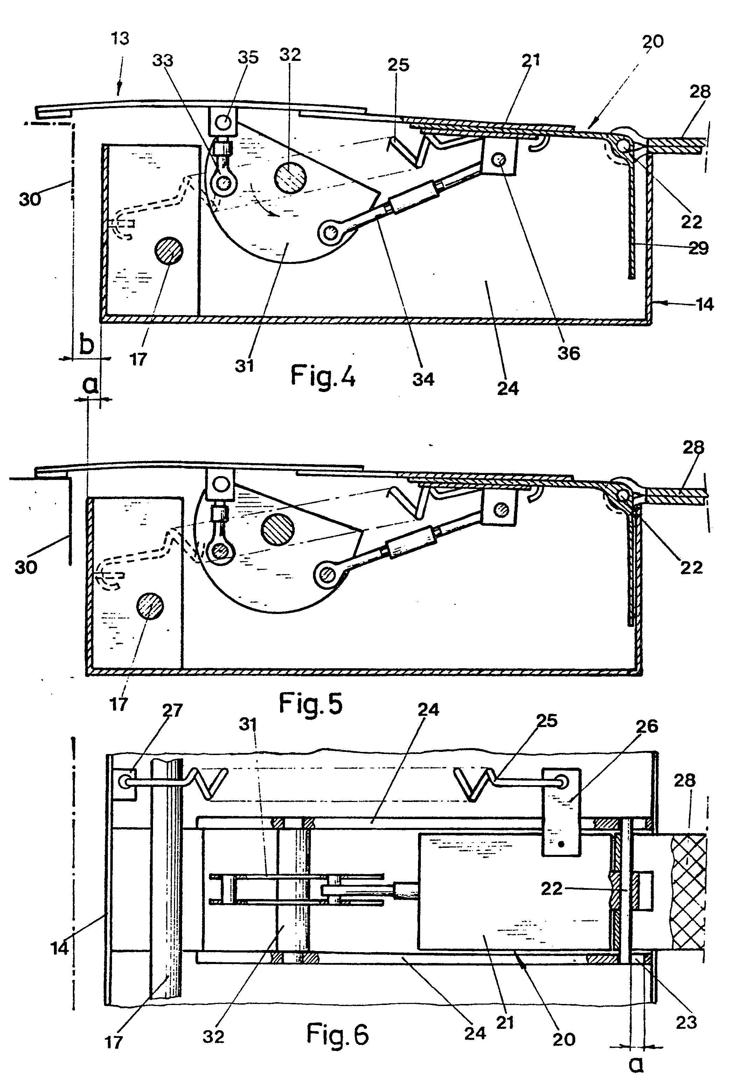

Le dessin ci-annexé représente, schématiquement et à titre d'exemple, deux formes d'exécution de l'objet de l'invention. La figure 1 est une vue en plan, la capote enlevée et partiellement déchirée, de la première forme d'exécution; les figures 2 et 3 sont des vues en coupe par les lignes II - II et III - III de la figure 1; la figure 4 est une vue en coupe, agrandie, par la ligne IV - IV de la figure 1; la figure 5 est une vue analogue à la figure 4 illustrant le fonctionnement du mécanisme engendrant le placage de la casquette, et la figure 6 est une vue en plan, partiellement déchirée, correspondant à la figure 4.

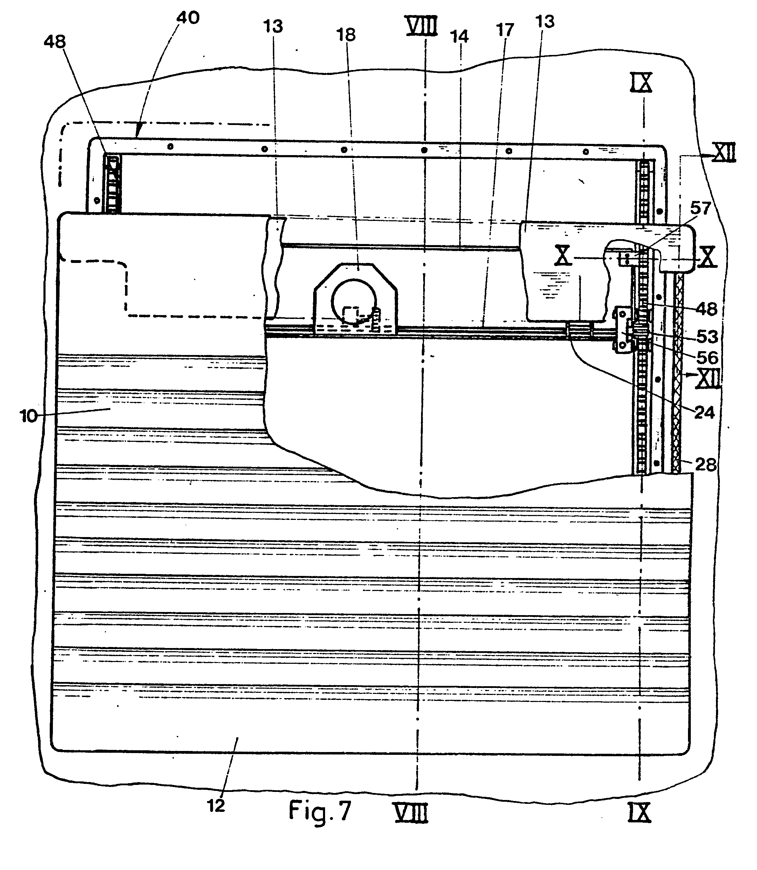

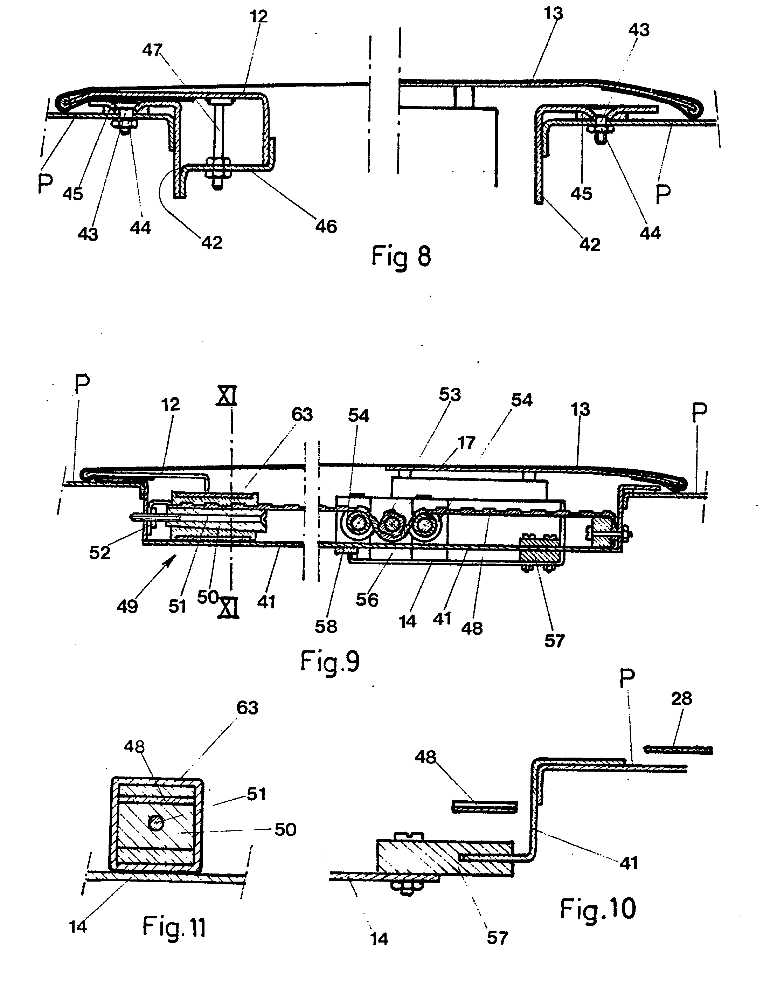

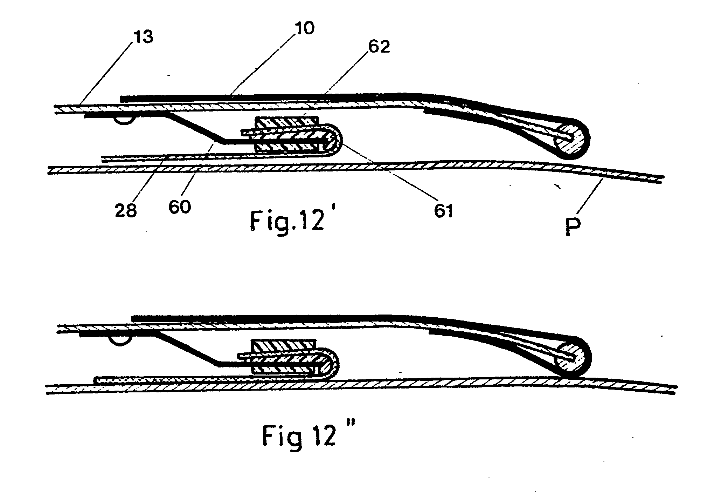

La figure 7 est une vue en plan de la seconde forme d'exécution dans laquelle la couverture et la casquette sont partiellement déchirées; les figures 8 à 10 et 12 (12' et 12'') sont des vues de détail en coupe selon les lignes VIII - VIII, IX - IX, X - X, XI - XI, et XII - XII de la figure 7; et la figure 11 et une vue de détail en coupe selon la ligne XI - XI de la figure 9.

Le toit ouvrant souple représenté aux figures 1 à 6 qui est destiné à couvrir une ouverture rectangulaire du pavillon P d'une automobile, comprend (figures 1, 2 et 3) une capote souple imperméable 10 débordant latéralement ladite ouverture, supportée par des arceaux 11 et reliée, d'une part, à une casquette fixe 12 recouvrant le bord postérieur de l'ouverture du pavillon, et, d'autre part, à une casquette mobile 13.

La casquette 13 est montée sur un carter transversal 14 qui peut se déplacer d'avant en arrière, selon un mouvement de translation, par l'entremise de quatre pignons 15 roulant sur deux crémaillères 16 fixées le long des deux bords longitudinaux de l'ouverture du pavillon.

Deux pignons 15 sont calés aux extrémités d'un arbre 17 susceptible d'être entraîné en rotation par un moteur-réducteur électrique 18 logé dans le carter 14, les deux autres sont calés sur deux axes fous 19.

Selon le sens de rotation du rotor du moteur 18, alimenté en courant continu par la batterie du véhicule, par l'intermédiaire d'un interrupteur à trois positions placé au tableau de bord, le carter 14 se déplace vers l'arrière ou vers l'avant en entraînant la capote 10 qui se plie ou se déplie.

La liaison entre la casquette 13 et le carter 14 comprend, (fig. 4 à 6), d'une part, deux équerres 20 dont les branches horizontales 21 sont fixées à la casquette 13 et d'autre part des ressorts 25. Les équerres 20 sont articulées sur des axes 22 engagés dans des ouvertures allongées 23 de flasques 23 soudés au corps du carter 14, et les ressorts 25 sont tendus entre des pattes 26 et 27 solidaires respectivement de la casquette 13 et du carter 14.

La casquette 13 et 14 carter 14 peuvent ainsi effectuer un mouvement relatif dans le sens du mouvement de translation, d'amplitude égale à la longueur a des ouvertures 23, avec ou contre l'action des ressorts 25 selon la direction du déplacement.

Sous l'action des ressorts 25, la casquette 13 et le carter 14 occupent la position relative dans laquelle ils sont représentés aux figures 4 et 6. On remarquera que les branches verticales 29 des équerres 20 se trouvent alors à une distance supérieure à a de la paroi postérieure de carter 14.

Le toit comprend encore deux sangles 28 qui s'étendent sous la capote 10 et qui sont attachées respectivement aux axes 22 et au bord postérieur de l'ouverture du pavillon. Ces sangles ont une longueur telle qu'elles sont tendues au moment où le carter se trouve à la distance a de la fin de sa course — la visière de la casquette 13 recouvrant alors le bord antérieur de l'ouverture du pavillon.

Dans ces conditions, les axes 22 sont immobilisés, lors de la fermeture du toit avant le carter 14 qui parcourt l'intervalle a à l'encontre de l'action des ressorts 25.

Lors de ce déplacement du carter 14, deux mécanismes 37, logés entre les flasques 24 et agissant conjointement, font pivoter les équerres 20 autour des axes 22 dans le sens anti-horaire et provoquant l'abaissement et le placage de la casquette 13 contre le bord 30 (figure 5).

Chaque mécanisme 37 est constitué (figures 4 à 6) par une bascule 31 dont l'axe 32 tourne dans les flasques 24, par deux biellettes 33 et 34, de longueurs réglables, articulées d'une part à la bascule 31 et d'autre part à deux axes 35 et 36 de la casquette 13, respectivement de la branche 21 de l'équerre 20 correspondante. La bascule 31, et les biellettes 33 et 34 forment un quadrilatère déformable.

A partir de l'instant où les axes 22 sont immobilisés par les sangles 28, le déplacement du carter 14 a pour effet de faire pivoter les bascules 31, d'armer les ressorts 25 et d'abaisser et plaquer la casquette 13 contre le bord 30.

Lors du déplacement inverse, les bascules 31 pivotent avec l'action des ressorts 25 jusque dans la position qu'elles occupent à la figure 4 en soulevant la casquette 13. L'entraînement du moteur-réducteur 18 est irréversible de sorte qu'à l'arrêt il verrouille le carter 14 quelle que soit sa position et en particulier dans sa position de placage.

On remarquera que les deux mouvements — translation et placage ainsi que le verrouillage de la casquette 13 sont obtenus à l'aide du seul moteur 18.

On remarquera également que tout effort contraire exercé sur la casquette 13 s'additionne à l'effet de placage et renforce l'étanchéité. Un autre avantage du toit décrit réside dans le fait qu'il est auto-réglant en ce sens qu'il n'est pas nécessaire de tenir compte, lors du montage, d'éventuelles petites différences de longueurs des sangles 28 (différence entrant dans les tolérances de fabrication où consécutives à d'autres facteurs tels que durée de stockage, humidité, température, etc.), puisqu'une marge $b$ permet de les absorber. Cette marge permet d'ailleurs également de rattraper un allongement des sangles 28 causé par leur usure, sans aucun préjudice pour le bon fonctionnement du mécanisme et de l'étanchéité du toit. Enfin on ajoutera que le fait d'incorporer le moteur 18 au carter 14 constitue un important avantage par rapport aux toits ouvrants souples dans lesquels la casquette est entraînée en translation par un moteur fixe par l'intermédiaire de moyens de transmission délicats, exposés à des agents tels que poussières, les eaux de pluie, etc., qui peuvent très rapidement les mettre hors d'usage.

Le toit ouvrant souple représenté aux figures 7 à 12 comprend, comme la première forme d'exécution décrite, une capote souple 10 attachée d'une part à une casquette arrière fixe 12 et d'autre part à une casquette avant 13 montée sur un carter 14 susceptible d'être entraîné en translation d'avant en arrière et inversément, par l'intermédiaire de l'arbre 17 d'un moteur-réducteur 18.

Dans cette forme d'exécution, les sangles 28 dont une seule est visible au dessin, sont situées latéralement, à l'extérieur de l'ouverture du pavillon et non plus à une certaine distance du bord de cette ouverture. Elles sont logées dans des ourlets ménagés dans les bords longitudinaux de la capote 10 et fixées aux deux casquettes d'une façon qui sera décrite en détail plus loin.

Hormis cette différence dans la situation des sangles 28 et le fait que le moteur-réducteur 18 soit situé dans la zone arrière du carter 14, le dispositif qui abaisse et plaque la casquette 13 contre le bord antérieur de l'ouverture du pavillon lors de la fermeture du toit et, inversément son décollage et son soulévement lors de l'ouverture, est semblable à celui de la première forme d'exécution. On ne l'a donc pas représenté en détail.

En revanche on a montré le détail du cadre 40 du toit qui n'apparaissait pas aux figures 1 à 3, parce qu'il a été conçu spécialement en fonction des moyens d'entraînement du carter 14 qui sont nouveaux.

La cadre 40, qui s'encastre dans l'ouverture du pavillon, est constitué longitudinalement par deux profilés en Z 41 et transversalement par deux profilés cornières 42. Les ailes supérieures de ces profilés recouvrent les quatre bords de l'ouverture du pavillon auxquels elles sont fixées par des vis 43, des écrous 44 et des rondelles 45.

La casquette arrière 12 prend appui sur des consoles 46 soudées intérieurement à l'aile verticale du profilé 42 correspondant. Elle est fixée à ces consoles par des boulons 47. Le serrage est tel que le bord, légèrement rabattu de la casquette s'applique élastiquement avec une certaine pression contre le bord correspondant à l'ouverture du pavillon de manière à assurer une étanchéité parfaite le long de ce bord.

Les moyens d'entraînement du carter 14 comprennent (figures 7 et 9) deux courroies souples crantées 48 s'étendant au dessus et le long des ailes inférieures des profilés 41. Ces courroies sont fixées à leurs deux extrémités aux profilés 42 correspondant, à l'arrière par l'intermèdiaire de dispositifs de tension 49.

Chaque dispositif 49 est constitué (figures 9 et 11) par un coin 50 enfoncé dans un corps tubulaire carré 63 entre lesquels l'extrémité correspondante de la courroie 48 est pincée, et par une vis 51 traversant axialement le coin 50 et engagée dans un écrou soudé sur l'aile verticale du profilé 42. Le corps 63 peut se déplacer axialement mais ne peut pas tourner de sorte qu'en vissant ou dévissant la vis 51 on tend plus ou moins la courroie 48.

Les courroies 48 sont respectivement en prise avec deux pignons crantés 53 calés sur chacune des extrémités de l'arbre-moteur 17 et passent sur deux galets de renvoi 54, disposés de part et d'autre de chaque pignon 53 de manière à répartir sur plusieurs dents du pignon 53 la charge transmise. Les galets 54 tournent librement sur des axes 55 bloqués dans des trous borgnes alésés dans le palier 56 et l'arbre 17.

Lorsque cet arbre 17 est entraîné en rotation par le moteur 18, le carter 14 se déplace selon un mouvement de translation vers l'avant ou vers l'arrière selon le sens de la rotation. Lors de ce mouvement, le carter 14 est guidé par deux patins 57, en nylon, un de chaque côté, qui coulissent le long des ailes inférieures des profilés 41. Par ailleurs il prend appui et glisse sur deux plaquettes 58, en nylon également.

Les courroies 48 sont réalisées en un matériau plastique éventuellement armé présentant à la fois une grande souplesse, une très forte résistance au cisaillement, une rigoureuse stabilité dimensionnelle et une résistance maximum à la rupture car elles supportent en position de verrouillage des tensions relativement élevées.

Les sangles 28 ne sont plus attachées à la casquette 13 par l'intermédiaire d'un axe, mais par l'entremise de dispositifs à ressort (figure 12'). Il en va d'ailleurs de même à l'arrière où les sangles 28 sont attachées par l'entremise de mêmes dispositifs à la casquette 12.

Chaque dispositif comprend une lame de ressort coudée 60 rivée à l'une de ses extrémités sous la casquette (12 - 13), un coin 61 chaussant l'extrémité libre de la lame 60 et un manchon 62 intérieurement conique.

L'extrémité de la sangle 28 est enroulée autour de sommet arrondi du coin 61 et le manchon 62 engagé à force sur la lame 60, le coin 61 et la sangle 28.

Sous l'effet de la tension de la sangle, un tel système devient autoserrant. En outre lors du mouvement de placage de la casquette 13, les lames 60 fléchissent et les forces de déformation élastique appliquent intimement les sangles 28 et par conséquent les bords longitudinaux de la capote contre les bords correspondants de l'ouverture du pavillon (figure 12'').

La flèche du pavillon se trouve ainsi automatiquement compensée et l'allongement inévitable dû au tissage de la sangle est partiellement ou totalement absorbé.

Les principaux avantages de cette seconde forme d'exécution qui découlent avant tout de l'utilisation de courroies et de pignons crantés sont les suivants:

a) diminution importante de la profondeur de cadre sous tôle de pavillon,

b) élimination du profil support de crémaillère et par conséquent simplification du cadre,

c) résolution simple du problème posé par la flèche longitudinale de la tôle de pavillon dans le cas d'une crémaillère conventionnelle,

d) suppression des problèmes de corrosion dûs aux phénomènes diélectriques ou à l'humidité que pose l'utilisation d'une crémaillère métallique,

e) absorption des vibrations émises par le moteur-réducteur d'où insonorisation parfaite,

f) élimination des problèmes d'entretien en après-vente.

L'invention n'est évidemment pas limitée aux deux formes d'exécution représentées et décrites. En particulier, on peut envisager en variante de remplacer la commande motorisée par une commande manuelle avec la même cinématique mais des déplacements du carter commandés par exemple par une manivelle et le verrouillage obtenu par un engrenage à vis tangente intercalé entre la manivelle et l'arbre 17.

En outre les mécanismes engendrent les mouvements d'abaissement et de soulèvement de la casquette 13 pourraient être réalisés par un système de câbles à la place des biellettes 33 et 34.

Enfin, les courroies crantées 48 ne doivent pas être nécessairement passer sur des galets 54 situés avant et après les pignons moteurs 53. D'autres solutions peuvent être mises en oeuvre pour assurer une bonne répartition de la charge transmise par les pignons 53 au carter 14.

Enfin, on utilisera avantageusement un moteur-réducteur 18 du type dans lequel l'alimentation est automatiquement coupée par un interrupteur thermique incorporé lorsque la casquette 13 est en fin de course.

**Revendications**

1. Toit ouvrant souple pour automobile comprenant un carter transversal (14) susceptible de se déplacer d'avant en arrière et inversément selon un mouvement de translation dans une ouverture rectangulaire du pavillon (P), une casquette (13) montée sur le carter (14), une capote souple (10) attachée d'une part au bord arrière de la casquette (13) et d'autre part au bord arrière de l'ouverture du pavillon (P), cette capote (10) étant destinée à être tendue en position de fermeture du toit et repliée en arrière en position d'ouverture, des moyens permettant d'entraîner ledit carter (14) vers l'avant ou vers l'arrière et de plaquer la casquette (13), en position de fermeture du toit, contre le bord avant de l'ouverture du pavillon (P), des moyens limitant vers l'avant la course de la casquette par rapport à celle du carter (14), et des ressorts (25) qui équilibrent les tensions de la capote (10), caractérisé par un mécanisme (37) qui engendre, à partir de l'instant où le carter (14) se déplace seul vers l'avant, à l'encontre de l'action d'un ressort (25), un mouvement d'abaissement et de placage de la casquette (13) contre le bord antérieur (30) de l'ouverture du pavillon, et qui engendre, lors du déplacement inverse, avec l'assistance dudit ressort (25), un mouvement de décollage et de soulèvement de la casquette (13).

2. Toit ouvrant selon la revendication 1, caractérisé par le fait que ladite casquette (13) est reliée au carter (14) par un axe (22).

3. Toit ouvrant selon la revendication 2, caractérisé par le fait que ledit mécanisme (37) comporte, disposés entre ladite casquette (13) et ledit carter (14), des éléments formant un quadrilatère déformable.

4. Toit ouvrant selon la revendication 3, caractérisé par le fait que ledit mécanisme (37) comprend une bascule (31) dont l'axe (32) est monté sur le carter (14) et au moins une biellette (33) reliée à cette bascule (31) et à la casquette (13).

5. Toit ouvrant selon la revendication 3, caractérisé par le fait que ledit mécanisme (37) comprend un système de câbles reliés à la casquette (13) et au carter (14).

6. Toit ouvrant selon la revendication 1, caractérisé par le fait que lesdits moyens d'entraînement comprennent au moins une courroie souple crantée (48) tendue entre les bords avant et arrière de l'ouverture de pavillon et engrenant avec au moins un pignon cranté (53) calé sur un arbre moteur (17) monté sur le carter (14).

7. Toit ouvrant selon la revendication 6, caractérisé par le fait qu'il comprend des moyens (49) permettant de régler la tension de la courroie crantée (48).

8. Toit ouvrant selon la revendication 6, caractérisé par le fait que lesdits moyens d'entraînement comprennent en outre un galet de renvoi (54) monté sur le carter (14).

9. Toit ouvrant selon la revendication 1, caractérisé par le fait que lesdits moyens limitant la course de la casquette (13) par rapport à celle du carter (14) sont constitués par au moins une sangle (28) attachée d'une part à la casquette (13) et d'autre part au voisinage du bord arrière de l'ouverture du pavillon.

10. Toit ouvrant selon la revendication 9, caractérisé par le fait que ladite sangle (28) est fixée à l'une de ses extrémités par l'intermédiaire d'un dispositif à ressort (60 - 61 - 62).

**Claims**

1. A flexible sliding roof for an automobile comprising a transverse casing (14) which may be displaced from the front to the back and vice versa in accordance with a movement of translation in a rectangular opening in the dome (P) of the roof, a cap (13) mounted on the casing (14), a flexible hood (10) attached, on one hand, to the rear edge of the cap (13) and, on the other hand, to the rear edge of the opening in the dome (P), the hood (10) being designed to be taut in the closed position of the roof and folded back in the open position, means enabling the forward and backward displacement of the said casing (14) and enabling the cap (13) to be urged, in the closed position of the roof, against the front edge of the opening in the dome (P), means limiting the path of the cap (13) towards the front in respect of the path of the casing (14), and springs (25) which balance the tensions on the hood (10), characterised by a mechanism (37) which causes, during the forward displacement alone of the casing (14), in opposition to the action of a spring (25), a movement which lowers and positions the cap (13) against the front edge (30) of the opening in the dome (P) and which causes, during displacement in the opposite direction, with the assistance of the said spring (25), a movement which releases and raises the cap (13).

2. A sliding roof as claimed in claim 1, characterised in that the said cap (13) is connected to the casing (14) by a pin (22).

3. A sliding roof as claimed in claim 2, characterised in that the said mechanism (37) comprises elements forming a deformable quadrilateral disposed between the cap (13) and the casing (14).

4. A sliding roof as claimed in claim 3, characterised in that the said mechanism (37) comprises a rocker (31) whose shaft (32) is mounted on the casing (14) and at least one connecting rod (33) connected to the rocker (31) and the cap (13).

5. A sliding roof as claimed in claim 3, characterised in that the said mechanism (37) comprises a system of cables connected to the cap (13) and the casing (14).

6. A sliding roof as claimed in claim 1, characterised in that the displacement means comprise at least one flexible notched belt (48) extending between the front and rear openings of the dome and engaging with at least one notched pinion (53) keyed on a drive shaft (17) mounted on the casing (14).

7. A sliding roof as claimed in claim 6, characterised in that it comprises means (49) enabling the tension of the notched belt (48) to be adjusted.

8. A sliding roof as claimed in claim 6, characterised in that the said displacement means comprise in addition a return roller (54) mounted on the casing (14).

9. A sliding roof as claimed in claim 1, characterised in that the said means for restricting the path of the cap (13) in respect of that of the casing (14) are constituted by at least one strap (28) attached, on one hand, to the cap (13) and, on the other hand, in the vicinity of the rear edge of the opening in the dome.

10. A sliding roof as claimed in claim 9, characterised in that the said strap (28) is fixed at one of its ends by means of a spring device (60, 61, 62).

**Patentansprüche**

1. Biegsames Schiebedach für Kraftwagen, umfassend ein durch eine Übertragungsbewegung in einer rechteckigen Öffnung der Dachplatte (P) von vorne nach hinten und umgekehrt verschiebbares quergerichtetes Gehäuse (14), eine auf dem Gehäuse (14) angebrachte Haube (13), eine einerseits an der Hinterkante der Haube (13) und andererseits an der Hinterkante der Öffnung der Dachplatte (P) befestigte biegsame Verschalung (10), wobei diese Verschalung (10) zum Spannen in Schliesstellung des Daches und zum Zurückfalten in Offenstellung vorgesehen ist, Mittel, die den Vorwärts- und Rückwärtsantrieb besagten Gehäuses (14) und das Absetzen der Haube (13) in der Schliesstellung des Daches gegen die Vorderkante vor der Öffnung der Dachplatte (P) zulassen, Mittel, die die Bewegung der Haube (13) in Vorwärtsrichtung bezüglich der des Gehäuses (14) begrenzen, und die Spannungen der Verschalung (10) ausgleichende Federn (25), gekennzeichnet durch einen Mechanismus (37), welcher von dem Augenblick an, wo das Gehäuse (14) sich allein gegen die Wirkung einer Feder (25) vorschiebt, eine Senkungs- und Absetzungsbewegung der Haube (13) gegen die Stirnkante (30) der Dachplattenöffnung hervorruft und welcher bei umgekehrter Verschiebung mit Hilfe besagter Feder (25) eine Ablösungs- und Hebebewegung der Haube (13) hervorruft.

2. Schiebedach nach dem Anspruch 1, dadurch gekennzeichnet, dass besagte Haube (13) mit dem Gehäuse (14) mittels einer Welle (22) verbunden ist.

3. Schiebedach nach dem Anspruch 2, dadurch gekennzeichnet, dass besagter Mechanismus (37) zwischen besagter Haube (13) und besagtem Gehäuse (14) angeordnete, ein verformbares Viereck bildende Organe aufweist.

4. Schiebedach nach dem Anspruch 3, dadurch gekennzeichnet, dass besagter Mechanismus (37) einen Kipphebel (31), dessen Welle (32) auf dem Gehäuse (14) angebracht ist, und mindestens eine mit diesem Kipphebel (31) und mit der Haube (13) verbundene Kurbelstange (33) umfasst.

5. Schiebedach nach dem Anspruch 3, dadurch gekennzeichnet, dass besagter Mechanismus (37) eine Anordnung von mit der Haube (13) und dem Gehäuse (14) verbundenen Seilen umfasst.

6. Schiebedach nach dem Anspruch 1, dadurch gekennzeichnet, dass besagte Antriebsmittel mindestens einen eingekerbten biegsamen Riemen (48) umfassen, der zwischen den Vorder- und Hinterkanten der Dachplattenöffnung gespannt ist und mit mindestens einem eingekerbten, auf einer auf dem Gehäuse (14) angebrachten Antriebswelle (17) befestigten Ritzel (53) in Eingriff steht.

7. Schiebedach nach dem Anspruch 6, dadurch gekennzeichnet, dass es Mittel (49) zum Einstellen der Spannung des gekerbten Riemens (48) umfasst.

8. Schiebedach nach dem Anspruch 6, dadurch gekennzeichnet, dass besagte Antriebsmittel ausserdem eine auf dem Gehäuse (14) angebrachte Umlenkrolle (54) umfassen.

9. Schiebedach nach dem Anspruch 1, dadurch gekennzeichnet, dass besagte, die Bewegung der Haube (13) bezüglich der des Gehäuses (14) begrenzende Mittel aus mindestens einem einerseits an der Haube (13) und andererseits in der Nähe der Hinterkante der Dachplattenöffnung angebrachten Gurt (28) bestehen.

10. Schiebedach nach dem Anspruch 9, dadurch gekennzeichnet, dass besagter Gurt (28) an seinem eine Ende mittels einer Feder-Vorrichtung (60 - 61 - 62) befestigt ist.

Fig.2

Fig.1

Fig.3

1

Fig. 4

Fig. 5

Fig. 6

Fig. 7

Fig 8

Fig.9

Fig.11

Fig.10

Fig.12'

Fig 12"